# DEMANDE DE BREVET EUROPEEN

(11) **EP 4 572 047 A1**
(43) Date de publication de la demande: **18.06.2025**
(21) Numéro de dépôt: 23307167.9
(22) Date de dépôt: 11.12.2023
(51) Int. Cl.: H02G 7/14

(54) **DISPOSITIF ET PROCÉDÉ DE LESTAGE D'UNE LIGNE AÉRIENNE DE TRANSPORT ET/OU DE DISTRIBUTION DE COURANT ÉLECTRIQUE**

(71) Demandeur: RTE RESEAU DE TRANSPORT D'ELECTRICITE, 92073 Paris La Défense Cedex (FR)
(72) Inventeur: TRUFFET, Benoît, 92073 Paris La Défense Cedex (FR)
(74) Mandataire: Bonnet, Michel

(57) **Abrégé**

Ce dispositif de lestage (10) d'une ligne aérienne de transport et/ou de distribution de courant électrique comporte au moins un contrepoids (12, 14, 16) à surface latérale et un élément (18) de fixation dudit au moins un contrepoids à la ligne aérienne par suspension. L'élément de fixation (18) comporte une première extrémité supérieure (20) de fixation à la ligne aérienne, au moins un bras (22) destiné à traverser ledit au moins un contrepoids (12, 14, 16) et une deuxième extrémité inférieure (24) de solidarisation dudit au moins un contrepoids (12, 14, 16) audit au moins un bras (22) de l'élément de fixation (18). Chaque contrepoids (12, 14, 16) comporte au moins une fente radiale (12E, 14E, 16E) s'étendant de sa surface latérale vers l'intérieur de manière à rendre latéralement visible au moins l'un dudit au moins un bras (22) de l'élément de fixation (18) lorsque ce dernier le traverse.

## Description

La présente invention concerne un dispositif de lestage d'une ligne aérienne de transport et/ou de distribution de courant électrique. Elle concerne également un procédé correspondant.

L'invention s'applique plus particulièrement à un dispositif de lestage comportant :
- au moins un contrepoids ; et
- un élément de fixation dudit au moins un contrepoids à la ligne aérienne par suspension, comportant :
   - une première extrémité, dite supérieure, de fixation à la ligne aérienne,
   - au moins un bras destiné à traverser ledit au moins un contrepoids, et
   - une deuxième extrémité, dite inférieure, de solidarisation dudit au moins un contrepoids audit au moins un bras de l'élément de fixation.

Un dispositif de ce type est évoqué sans détails dans le document de brevet FR 2 215 733 et ceux habituellement mis en place sur les structures de transport et/ou de distribution de courant électrique par lignes aériennes comportent généralement plusieurs contrepoids suspendus par des étriers qui les traversent sous des chaînes d'isolateurs, pouvant peser au total de 80 à 960 kg. Il s'agit ainsi de stabiliser ces dernières.

Mais l'usure de ces dispositifs de lestage, notamment par corrosion des étriers, est difficile à anticiper et à vérifier. Or ils sont soumis aux intempéries et les risques de rupture d'étrier avec chute au sol existent. Cela pose un problème de sécurité des tiers, en particulier quand ils sont disposés au-dessus de zones de passages de personnes. Un contrôle régulier est donc nécessaire, mais il nécessite aujourd'hui des interventions impliquant un démontage et remontage ou remplacement de chaque dispositif de lestage inspecté.

Il peut ainsi être souhaité de prévoir un dispositif de lestage qui permette de s'affranchir d'au moins une partie des problèmes et contraintes précités.

Il est donc proposé un dispositif de lestage d'une ligne aérienne de transport et/ou de distribution de courant électrique, comportant :
- au moins un contrepoids à surface latérale ; et
- un élément de fixation dudit au moins un contrepoids à la ligne aérienne par suspension, comportant :
   - une première extrémité, dite supérieure, de fixation à la ligne aérienne,
   - au moins un bras destiné à traverser ledit au moins un contrepoids, et
   - une deuxième extrémité, dite inférieure, de solidarisation dudit au moins un contrepoids audit au moins un bras de l'élément de fixation ;
dans lequel chaque contrepoids comporte au moins une fente radiale s'étendant de sa surface latérale vers l'intérieur de manière à rendre latéralement visible au moins l'un dudit au moins un bras de l'élément de fixation lorsque ce dernier le traverse.

Ainsi, le dispositif de lestage permet une vérification visuelle de l'état d'au moins un bras de son élément de fixation sans démontage préalable. En outre, la fente radiale permet une ventilation par passage d'air qui réduit les effets de la corrosion et ralentit l'usure.

De façon optionnelle, l'élément de fixation comporte un étrier à deux bras.

De façon optionnelle également, un dispositif de lestage selon l'invention peut comporter plusieurs contrepoids et chaque contrepoids peut comporter au moins un bossage, situé en face inférieure ou supérieure lorsqu'il est suspendu et traversé par ledit au moins un bras de l'élément de fixation, de manière à maintenir un volume libre entre les contrepoids deux à deux lorsqu'ils sont empilés dans ledit au moins un bras de l'élément de fixation.

De façon optionnelle également, chaque contrepoids comporte ledit au moins un bossage en face supérieure et comporte en outre au moins une cavité correspondante en face inférieure, ladite au moins une cavité étant dimensionnée en profondeur pour recevoir une partie seulement de l'épaisseur dudit au moins un bossage d'un autre contrepoids.

De façon optionnelle également, chaque contrepoids comporte quatre bossages en face supérieure au voisinage des quatre coins d'un carré qu'il forme et quatre cavités correspondantes en face inférieure pour recevoir une partie seulement de l'épaisseur des quatre bossages d'un autre contrepoids.

De façon optionnelle également, un dispositif de lestage selon l'invention peut comporter plusieurs contrepoids et au moins un arbre de maintien traversant chaque contrepoids pour un maintien des contrepoids entre eux.

De façon optionnelle également, chaque contrepoids comporte une unique fente radiale, s'étendant par exemple jusqu'à un axe central.

De façon optionnelle également, un dispositif de lestage selon l'invention peut comporter plusieurs contrepoids empilés avec un décalage angulaire, notamment tête-bêche, deux à deux par rapport à l'emplacement de leur unique fente radiale.

De façon optionnelle également, chaque contrepoids est de forme générale carrée aux angles arrondis.

De façon optionnelle également, chaque contrepoids pèse 40 kg +/- 10% ou 80 kg +/- 1 0% et présente une épaisseur adaptée en fonction de ce poids.

Il est également proposé un procédé de lestage d'une ligne aérienne de transport et/ou de distribution de courant électrique, comportant les étapes suivantes :
- fourniture d'au moins un contrepoids à surface latérale ;
- fourniture d'un élément de fixation dudit au moins un contrepoids à la ligne aérienne par suspension, comportant :
   - une première extrémité, dite supérieure, de fixation à la ligne aérienne,
   - au moins un bras destiné à traverser ledit au moins un contrepoids, et
   - une deuxième extrémité, dite inférieure, de solidarisation dudit au moins un contrepoids audit au moins un bras de l'élément de fixation ;
- insertion dudit au moins un contrepoids autour dudit au moins un bras de l'élément de fixation ;
- solidarisation dudit au moins un contrepoids audit au moins un bras de l'élément de fixation par la deuxième extrémité inférieure ; et
- fixation de l'élément de fixation à la ligne aérienne par suspension à partir de sa première extrémité supérieure ;
dans lequel chaque contrepoids est fourni avec au moins une fente radiale s'étendant de sa surface latérale vers l'intérieur, et dans lequel chaque contrepoids est inséré autour dudit au moins un bras de l'élément de fixation de manière à rendre latéralement visible au moins l'un dudit au moins un bras de l'élément de fixation grâce à ladite au moins une fente radiale.

De façon optionnelle, l'élément de fixation est fixé sur la ligne aérienne à l'aplomb d'une chaîne d'isolateurs elle-même suspendue à un pylône.

L'invention sera mieux comprise à l'aide de la description qui va suivre, donnée uniquement à titre d'exemple et faite en se référant aux dessins annexés dans lesquels :
- la figure 1 représente schématiquement et selon deux perspectives opposées la structure générale d'un dispositif de lestage d'une ligne aérienne de transport et/ou de distribution de courant électrique, selon un mode de réalisation de l'invention,
- la figure 2 représente schématiquement en vue de dessus la structure générale d'un contrepoids du dispositif de lestage de la figure 1,
- la figure 3A représente schématiquement une première variante du contrepoids de la figure 2 selon une coupe A-A indiquée dans la figure 2,
- la figure 3B représente schématiquement une deuxième variante du contrepoids de la figure 2 selon la même coupe A-A,
- la figure 4 représente schématiquement la structure générale du dispositif de lestage de la figure 1 en vue latérale de face,
- la figure 5 représente schématiquement la structure générale du dispositif de lestage de la figure 1 en vue latérale arrière,
- la figure 6 représente schématiquement la structure générale du dispositif de lestage de la figure 1 en vue latérale de côté,
- la figure 7 représente schématiquement la structure générale du dispositif de lestage de la figure 1 en vue de dessus,
- la figure 8 représente schématiquement la structure générale du dispositif de lestage de la figure 1 en vue de dessous,
- la figure 9 illustre les étapes successives d'un procédé de lestage d'une ligne aérienne de transport et/ou de distribution de courant électrique, selon un mode de réalisation de l'invention.

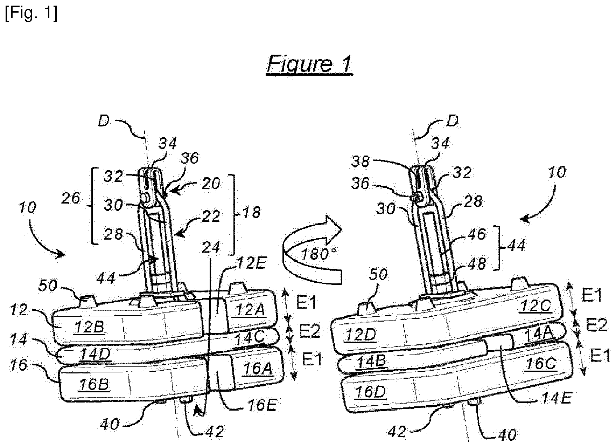

Le dispositif de lestage 10 représenté en perspective sur la figure 1 est illustré selon deux dispositions opposées à 180 degrés autour de son axe longitudinal principal noté D. Il est destiné à être suspendu et fixé sur une ligne aérienne de transport et/ou de distribution de courant électrique, notamment à l'aplomb d'une chaîne d'isolateurs elle-même suspendue à un pylône. Il permet ainsi de stabiliser la ligne aérienne, notamment la chaîne d'isolateurs le cas échéant.

Il comporte au moins un contrepoids, plus précisément trois contrepoids empilés dans l'exemple non limitatif de la figure 1. Un premier contrepoids supérieur 12 de première épaisseur maximale E1 est de forme générale carrée aux angles arrondis. Il présente ainsi une surface latérale à quatre faces dont une face avant 12A et une face de côté gauche 12B sont visibles en partie gauche de la figure 1, et dont une face arrière 12C et une face de côté droit 12D sont visibles en partie droite de la figure 1. Un deuxième contrepoids intermédiaire 14 de deuxième épaisseur minimale E2 est de même forme générale carrée aux angles arrondis, orienté à 180 degrés autour de l'axe D par rapport au premier contrepoids supérieur 12, c'est-à-dire tête-bêche. Il présente ainsi une surface latérale à quatre faces dont une face arrière 14C et une face de côté droit 14D sont visibles en partie gauche de la figure 1, et dont une face avant 14A et une face de côté gauche 14B sont visibles en partie droite de la figure 1. Un troisième contrepoids inférieur 16 de première épaisseur maximale E1 est identique au premier contrepoids supérieur 12 et orienté de la même façon, c'est-à-dire tête-bêche avec le deuxième contrepoids intermédiaire 14. Il présente ainsi une surface latérale à quatre faces dont une face avant 16A et une face de côté gauche 16B sont visibles en partie gauche de la figure 1, et dont une face arrière 16C et une face de côté droit 16D sont visibles en partie droite de la figure 1.

Le fait de permettre au moins deux épaisseurs différentes E1, E2 de contrepoids permet de proposer des contrepoids de poids différents, par exemple des contrepoids de 80 kg (épaisseur E1) et 40 kg (épaisseur E2), alors que les contrepoids connus sont généralement tous identiques et de poids unique à 80 kg pour le lestage de lignes électriques aériennes. Il en résulte une plus grande flexibilité dans le lestage dont le poids total s'étend généralement de 80 kg à 960 kg dans le domaine du transport et/ou de la distribution de courant électrique.

Le dispositif de lestage 10 comporte en outre un élément 18 de fixation des trois contrepoids 12, 14, 16 à une ligne aérienne par suspension. L'élément de fixation 18 comporte une première extrémité supérieure 20 de fixation à la ligne aérienne, au moins un bras 22 destiné à traverser les trois contrepoids 12, 14, 16 et une deuxième extrémité inférieure 24 de solidarisation des contrepoids 12, 14, 16 audit au moins un bras de l'élément de fixation 18.

Dans l'exemple non limitatif de la figure 1, l'élément de fixation 18 comporte plus précisément un étrier 26 à deux bras de fixation 28, 30 s'étendant parallèlement selon la direction D à partir d'un sommet 32 où ils se rejoignent en V inversé. La première extrémité supérieure 20 comporte une manille 34 à axe boulonné 36 avec goupille de sécurité 38. Le sommet 32 de l'étrier 26 est inséré, et suspendu à l'axe boulonné 36, dans la manille 34 qui est en outre destinée à recevoir un câble électrique de la ligne aérienne à laquelle elle doit être suspendue. La deuxième extrémité inférieure 24 comporte des écrous 40, 42 respectivement vissés aux extrémités inférieures filetées des deux bras de fixation 28, 30 pour maintenir les trois contrepoids 12, 14, 16 dans l'étrier 26. Une plaque trouée (non visible sur la figure 1, mais comportant au moins deux trous pour le passage des deux bras de fixation 28, 30) peut en outre être disposée entre la face inférieure du troisième contrepoids inférieur 16 et les écrous 40, 42 pour renforcer ce maintien.

De façon optionnelle, des moyens supplémentaires de maintien entre eux des trois contrepoids 12, 14, 16 peuvent être prévus. Dans l'exemple de la figure 1, ils prennent la forme non limitative d'un arbre de maintien 44 qui traverse chaque contrepoids. L'arbre de maintien 44 comporte par exemple une vis 46 à tête plate (non visible sur la figure 1 car disposée contre la face inférieure du troisième contrepoids inférieur 16) et au moins un écrou de serrage 48 (serré contre la face supérieure du premier contrepoids supérieur 12), ces deux derniers éléments coopérant pour enserrer et maintenir entre eux les trois contrepoids 12, 14, 16.

De façon optionnelle également, chaque contrepoids 12, 14, 16 comporte au moins un bossage, situé en face inférieure ou supérieure lorsqu'il est suspendu et traversé par ledit au moins un bras de l'élément de fixation 18, de manière à maintenir un volume libre entre les contrepoids deux à deux lorsqu'ils sont empilés et éventuellement maintenus entre eux par l'arbre de maintien 44. Cela permet une ventilation supplémentaire entre les contrepoids. Dans l'exemple de la figure 1, chaque contrepoids 12, 14, 16 comporte plus précisément quatre bossages 50, situés en face supérieure aux voisinages des quatre coins du carré qu'il forme lorsqu'il est suspendu et traversé par les deux bras 28, 30 de l'étrier 26.

Conformément aux principes généraux de la présente invention, chaque contrepoids 12, 14, 16 comporte au moins une fente radiale s'étendant de sa surface latérale vers l'intérieur, c'est-à-dire vers son centre matérialisé par l'axe central D dans l'exemple de la figure 1, de manière rendre latéralement visible au moins l'un dudit au moins un bras de l'élément de fixation 18.

Plus précisément, dans l'exemple non limitatif de la figure 1, la face avant 12A du premier contrepoids supérieur 12 présente une fente 12E qui s'étend radialement dans toute son épaisseur jusqu'en partie centrale, au-delà même de son axe central, cette fente radiale 12E intégrant ainsi le bras 30 de l'étrier 26 et même optionnellement la vis 46 de l'arbre de maintien 44. La face avant 14A du deuxième contrepoids intermédiaire 14, orientée à 180 degrés par rapport à la face avant 12A, c'est-à-dire tête-bêche, présente une fente 14E qui s'étend radialement dans toute son épaisseur jusqu'en partie centrale, au-delà même de son axe central, cette fente radiale 14E intégrant ainsi le bras 28 de l'étrier 26 et même optionnellement la vis 46 de l'arbre de maintien 44. Enfin, la face avant 16A du troisième contrepoids inférieur 16, orientée comme la face avant 12A, c'est-à-dire tête-bêche par rapport à la face avant 14A, présente une fente 16E qui s'étend radialement dans toute son épaisseur jusqu'en partie centrale, au-delà même de son axe central, cette fente radiale 16E intégrant ainsi le bras 30 de l'étrier 26 et même optionnellement la vis 46 de l'arbre de maintien 44.

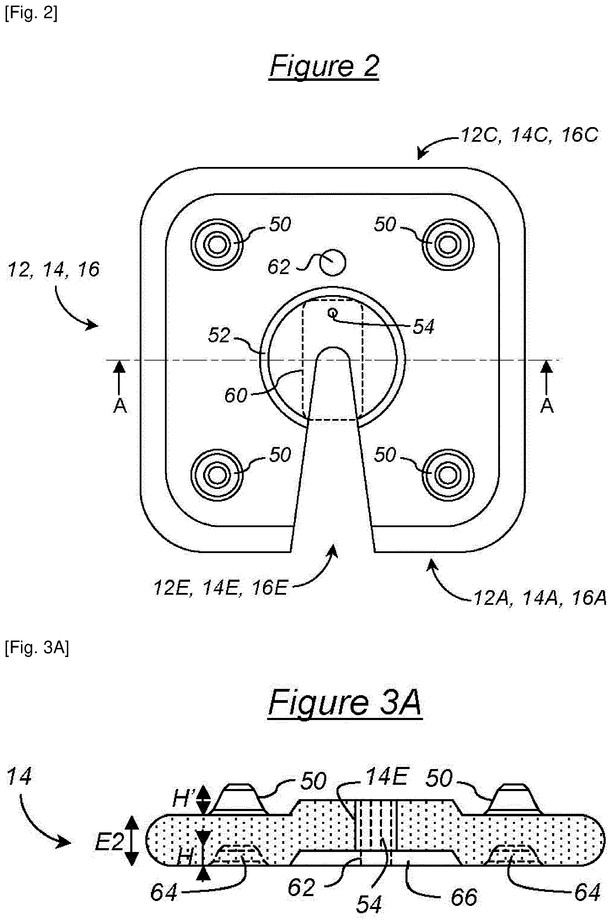

L'un quelconque des contrepoids 12, 14, 16 est représenté schématiquement en vue de dessus sur la figure 2.

Sa face supérieure présente les quatre bossages 50 précités aux quatre coins du carré arrondi qu'il forme. Il présente en outre un plateau central 52 en surépaisseur, celui du premier contrepoids 12 étant également visible sur la figure 1, percé d'un premier trou traversant 54 destiné à recevoir le bras 28 (pour les contrepoids 12 et 16) ou 30 (pour le contrepoids 14) de l'étrier 26 conformément à la configuration de la figure 1. Sans obligation particulière, le plateau central 52 est par exemple de forme circulaire.

La fente radiale 12E, 14E ou 16E du contrepoids 12, 14 ou 16 s'étend dans toute son épaisseur depuis sa face avant 12A, 14A ou 16A jusqu'à son centre, et même un peu au-delà en arrondi autour du centre, de sorte qu'elle est apte à recevoir le bras 30 (pour les contrepoids 12 et 16) ou 28 (pour le contrepoids 14) de l'étrier 26 conformément à la configuration de la figure 1, et à recevoir la vis 46 de l'arbre de maintien 44. La fente radiale 12E, 14E ou 16E présente en outre de façon optionnelle mais avantageuse, une ouverture angulaire, par exemple d'environ 15 degrés, depuis le centre vers l'extérieur de la face avant 12A, 14A, 16A, pour améliorer la visibilité du bras 28 ou 30 qui la traverse, voire même celle de la vis 46.

Une plaque d'appui 60 de forme quelconque, par exemple essentiellement rectangulaire et percée de trois trous correspondant au passage des deux bras 28, 30 de l'étrier ainsi que de la vis 46 de l'arbre de maintien 44, est représentée en pointillés sur la figure 2. Elle s'interpose optionnellement entre le plateau central 52 de la face supérieure du premier contrepoids 12 et l'écrou de serrage 48. Elle est visible sur la figure 1 et remplit une fonction de renforcement du maintien des trois contrepoids 12, 14, 16 entre eux pour compenser la fragilité apportée par les fentes radiales 12E, 14E et 16E.

Enfin, chaque contrepoids 12, 14, 16 est percé d'un deuxième trou traversant 62, disposé entre sa fente radiale 12E, 14E ou 16E et sa face arrière 12C, 14C ou 16C. Ce trou 62 est destiné à recevoir une élingue pour le transport et l'installation sur le pylône.

Le deuxième contrepoids intermédiaire 14 est représenté sur la figure 3A selon la coupe A-A de la figure 2. Il présente l'épaisseur minimale E2 selon une première variante de contrepoids à 40 kg par exemple. Les perçages pour les trous 54 et 62 y sont représentés en pointillés car en arrière-plan non visible. En revanche, le perçage de la fente radiale 14E y est représenté en traits plein parce que visible dans la coupe A-A.

Selon un aménagement qui n'est visible, ni sur la figure 1, ni sur la figure 2, il présente dans sa face inférieure opposée à la face supérieure de la figure 2 quatre cavités 64 en correspondance des quatre bossages 50. Ces cavités 64 présentent une profondeur commune de hauteur H qui est strictement inférieure à l'épaisseur commune H' des quatre bossages 50, de sorte qu'elles sont en fait dimensionnées pour ne recevoir qu'une partie H de l'épaisseur H' des bossages 50 d'un autre contrepoids, par exemple ceux du troisième contrepoids inférieur 16 sur lequel le deuxième contrepoids 14 est empilé.

Selon un autre aménagement qui n'est visible, ni sur la figure 1, ni sur la figure 2, le deuxième contrepoids intermédiaire 14 présente dans sa face inférieure une cavité centrale 66 en correspondance du plateau central 52 et de forme complémentaire par exemple circulaire. Elle permet, en coopération avec les cavités 64, un centrage et un bon positionnement angulaire de l'empilement de contrepoids 12, 14, 16.

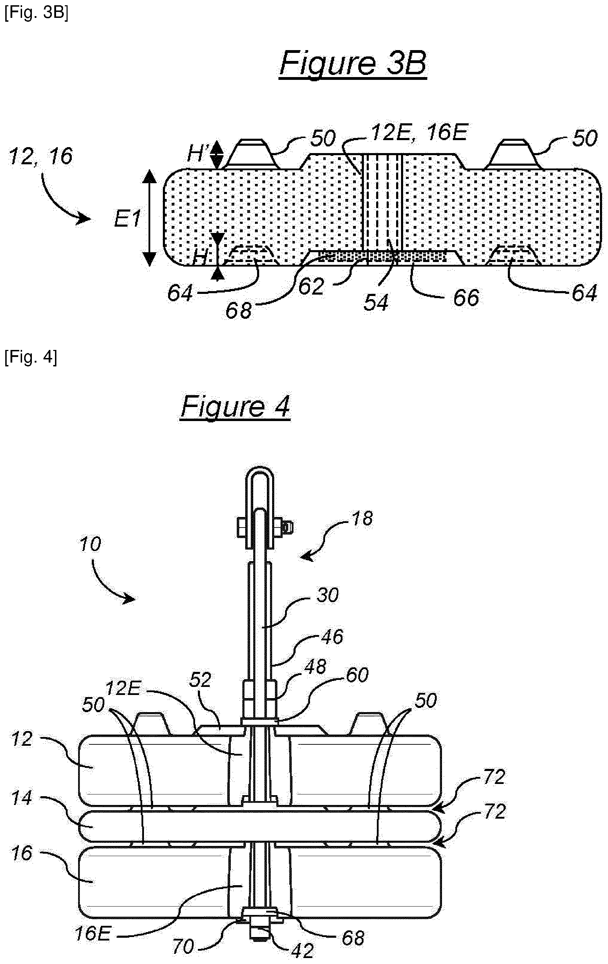

L'un quelconque du premier ou troisième contrepoids 12 ou 16 est représenté sur la figure 3B selon la coupe A-A de la figure 2. Il présente l'épaisseur maximale E1 selon une deuxième variante de contrepoids à 80 kg par exemple. Les perçages pour les trous 54 et 62 y sont représentés en pointillés car en arrière-plan non visible. En revanche, le perçage de la fente radiale 12E ou 16E y est représenté en traits plein parce que visible dans la coupe A-A.

Selon l'aménagement précité qui n'est visible, ni sur la figure 1, ni sur la figure 2, il présente dans sa face inférieure opposée à la face supérieure de la figure 2 les quatre cavités 64 en correspondance des quatre bossages 50. Comme pour le deuxième contrepoids intermédiaire 14, ces cavités 64 présentent une profondeur commune de hauteur H qui est strictement inférieure à l'épaisseur commune H' des quatre bossages 50, de sorte qu'elles sont en fait dimensionnées pour ne recevoir qu'une partie H de l'épaisseur H' des bossages 50 d'un autre contrepoids, par exemple ceux du deuxième contrepoids intermédiaire 14 sur lequel le premier contrepoids supérieur 12 est empilé.

Selon l'autre aménagement précité qui n'est visible, ni sur la figure 1, ni sur la figure 2, le premier ou troisième contrepoids 12 ou 16 présente dans sa face inférieure la cavité centrale 66 en correspondance du plateau central 52 et de forme complémentaire par exemple circulaire. Lorsqu'il s'agit du troisième contrepoids inférieur 16, une plaque circulaire trouée 68 représentée en pointillés sur la figure 3B peut être disposée au fond de la cavité centrale 66 pour servir d'appui à la tête de la vis 46 et aux écrous 40 et 42.

Le dispositif de lestage 10 est représenté en vue latérale de face sur la figure 4. On y voit la plaque d'appui 60 sur toute sa largeur au-dessus de la fente radiale 12E, posée sur le plateau central 52 du premier contrepoids supérieur 12. On y voit également partiellement la plaque circulaire trouée 68 placée dans la cavité centrale 66 du contrepoids inférieur 16. On y voit également l'écrou 42 vissé à l'extrémité inférieure du bras 30 de l'étrier 26 jusqu'à la plaque circulaire 68. On y voit également la tête de la vis 46, cette tête étant identifiée par la référence 70. On y constate enfin que l'insertion partielle des bossages 50 des deuxième et troisième contrepoids 14 et 16 dans les cavités 64 respectives des premier et deuxième contrepoids 12 et 14 permet de maintenir deux volumes libres 72 entre les premier et deuxième contrepoids 12 et 14, d'une part, et entre les deuxième et troisième contrepoids 14 et 16, d'autre part.

Avantageusement selon cette vue, les deux fentes radiales 12E et 16E des premier et troisième contrepoids 12 et 16 permettent d'accéder visuellement au bras 30 de l'étrier 26 pour un contrôle rapide et efficace de son état. La vis 46 à tête 70 est elle aussi visible derrière le bras 30, cette visibilité étant améliorée par l'ouverture angulaire des deux fentes radiales 12E et 16E, et peut donc être contrôlée visuellement. Avantageusement également, ces fentes radiales 12E et 16E ainsi que les volumes libres 72 permettent une ventilation de l'ensemble qui limite les dégradations et une usure prématurée par corrosion.

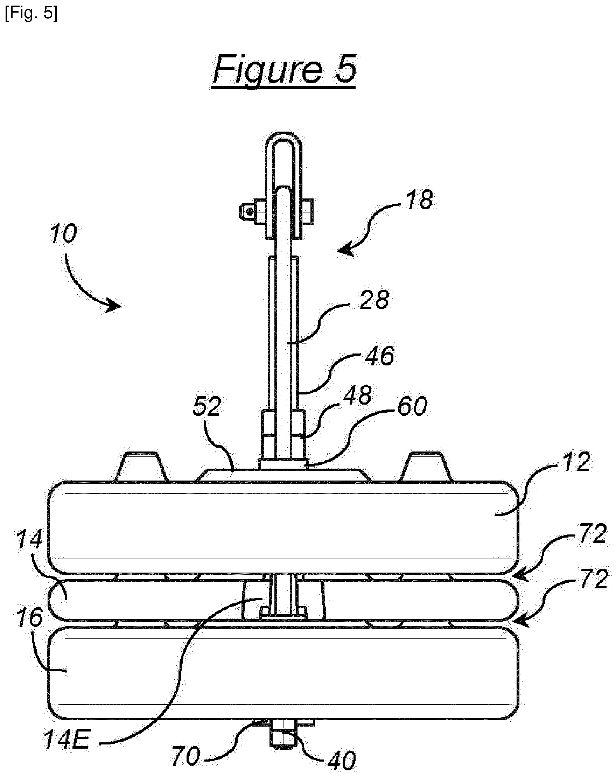

Le dispositif de lestage 10 est représenté en vue latérale arrière sur la figure 5. On y voit de nouveau la plaque d'appui 60 sur toute sa largeur posée sur le plateau central 52 du premier contrepoids supérieur 12. On y voit également l'écrou 40 vissé à l'extrémité inférieure du bras 28 de l'étrier 26 jusqu'à la plaque circulaire 68 (non visible sur cette figure) et la tête 70 de la vis 46.

Avantageusement selon cette vue, la fente radiale 14E du deuxième contrepoids 14 permet d'accéder visuellement au bras 28 de l'étrier 26 pour un contrôle rapide de son état. La vis 46 à tête 70 est elle aussi visible derrière le bras 28, cette visibilité étant améliorée par l'ouverture angulaire de la fente radiale 14E, et peut donc être contrôlée visuellement. Avantageusement également, cette fente radiale 14E ainsi que les volumes libres 72 permettent une aération de l'ensemble qui limite les dégradations et l'usure prématurée par corrosion.

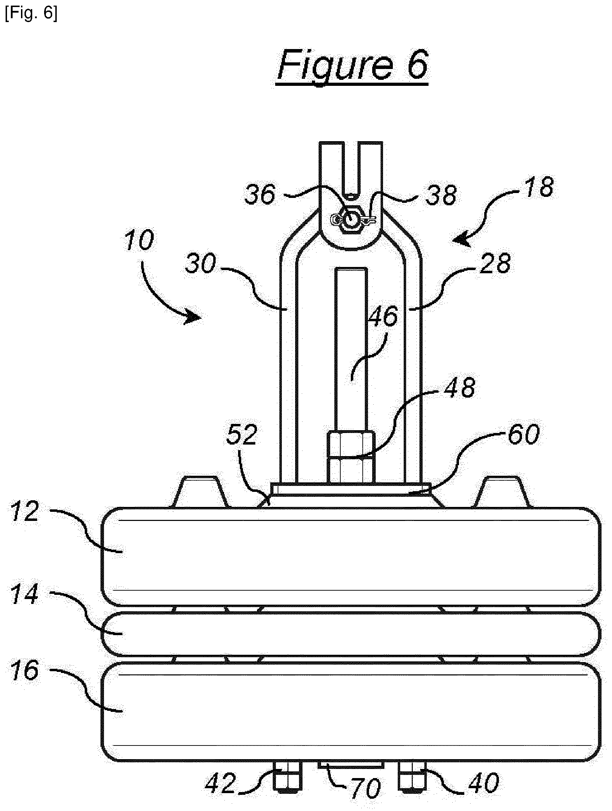

Le dispositif de lestage 10 est représenté en vue latérale de côté sur la figure 6. Il s'agit en l'occurrence du côté droit. On y voit de nouveau la plaque d'appui 60, mais cette fois-ci sur toute sa longueur, posée sur le plateau central 52 du premier contrepoids supérieur 12 avec l'écrou 48 vissé contre elle dans la vis 46 du bras de maintien 44. On y voit également les deux écrous 40 et 42 vissés aux extrémités inférieures des bras 28 et 30 de l'étrier 26 jusqu'à la plaque circulaire 68 (non visible sur cette figure) et la tête 70 de la vis 46 entre les deux écrous 40, 42. On y voit en outre nettement la goupille de sécurité 38 insérée dans un trou traversant radial de l'axe boulonné 36.

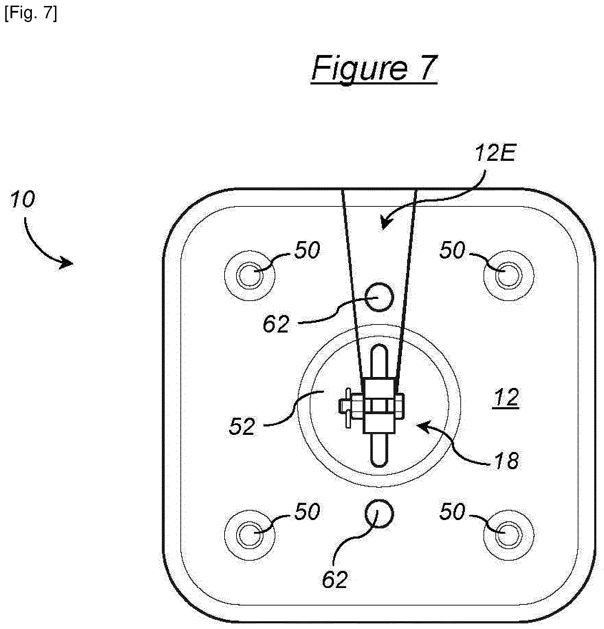

Le dispositif de lestage 10 est représenté en vue de dessus sur la figure 7. Cette vue présente l'avantage de mettre en évidence la disposition des trous traversants 62 situés de part et d'autre du plateau central 52 du premier contrepoids supérieur 12 grâce à la disposition tête-bêche à 180 degrés autour de l'axe D du deuxième contrepoids intermédiaire 14 par rapport aux deux autres contrepoids 12 et 16. Ils permettent l'insertion d'au moins une élingue pour un transport équilibré du dispositif de lestage 10 en hauteur vers le câble électrique d'une ligne aérienne à lester. Selon une première variante, deux élingues indépendantes traversent les trous 62 de part et d'autre du plateau central 52. Selon une deuxième variante, une même élingue peut traverser chaque trou traversant 62 situé d'un côté du plateau central 52 puis reboucler pour traverser chaque trou traversant 62 situé de l'autre côté du plateau central 52 en sens inverse.

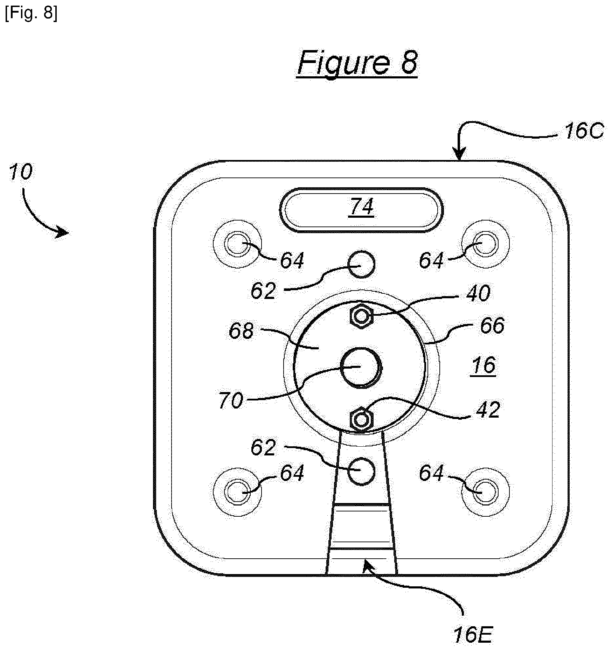

Enfin, le dispositif de lestage 10 est représenté en vue de dessous sur la figure 8. Cette vue présente l'avantage de mettre en évidence la disposition de la plaque circulaire trouée 68 contre la cavité centrale 66 du troisième contrepoids inférieur 16, ainsi que la tête 70 de vis 46 et les deux écrous 40, 42 en appui inférieur contre cette plaque 68. On note la présence d'une cavité supplémentaire 74, de forme rectangulaire ou oblongue et s'étendant entre deux des cavités 64 de la face inférieure du troisième contrepoids inférieur 16 le long de sa face arrière 16C. Il en est par exemple de même pour les deux autres contrepoids 12 et 14. Cette cavité permet l'insertion et la protection d'une étiquette d'identification du contrepoids 12, 14 ou 16, pouvant en outre inclure des informations sur son poids, son matériau ou autre propriété.

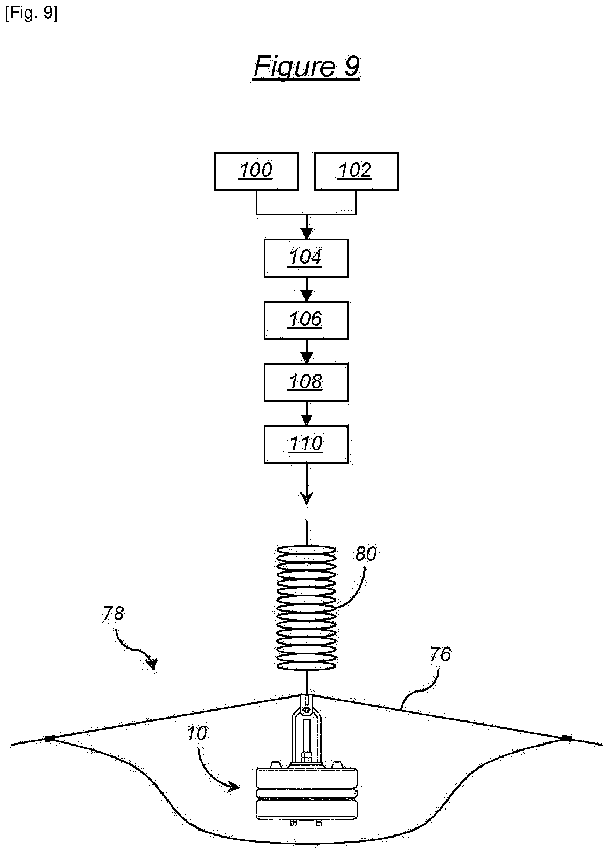

Les étapes successives d'un procédé de lestage d'une ligne aérienne de transport et/ou de distribution de courant électrique, selon un mode de réalisation de l'invention, vont maintenant être détaillées en référence à la figure 9, sur la base de l'exemple particulier et non limitatif du dispositif de lestage des figures 1 à 8.

Au cours d'une première étape 100, au moins un contrepoids à surface latérale présentant une fente radiale conformément aux principes généraux de la présente invention est fourni. Plus précisément, les trois contrepoids 12, 14 et 16 à fentes radiales 12E, 14E et 16E sont fournis. Ils sont empilés tête-bêche comme illustré sur les figures 1, 4 et 5 et sont maintenus entre eux à l'aide de la plaque d'appui 60, de la plaque circulaire 68 et de l'arbre de maintien 44, ce dernier traversant les fentes radiales 12E, 14E et 16E.

Au cours d'une deuxième étape 102 qui peut être exécutée indépendamment de la première étape 100, l'élément de fixation 18 est fourni. Plus précisément c'est l'élément de fixation 18 à étrier 26 qui est fourni conformément à ce qui est illustré sur les figures 1 et 4 à 6.

Au cours d'une étape suivante 104, les trois contrepoids 12, 14, 16 empilés et maintenus entre eux sont insérés grâce aux trous traversants 54 et aux fentes radiales 12E, 14E, 16E autour des deux bras 28 et 30 de l'étrier 26.

Au cours d'une étape suivante 106, l'ensemble des trois contrepoids 12, 14, 16 maintenus entre eux est solidarisé aux deux bras 28 et 30 de l'étrier 26 par vissage des écrous 40 et 42 aux extrémités inférieures filetées des bras 28 et 30 formant l'extrémité inférieure 24 de l'élément de fixation 18.

Au cours d'une étape suivante 108, le dispositif de lestage 10 ainsi constitué est transporté au voisinage du lieu de fixation sur ligne aérienne à l'aide d'une ou plusieurs élingue(s) introduite(s) dans les trous 62.

Enfin, au cours d'une dernière étape 110, après détachement de la ou des élingue(s), l'extrémité supérieure 20 du dispositif de lestage 10 est fixée au câble conducteur 76 d'une ligne aérienne 78, par exemple à l'aplomb d'une chaîne d'isolateurs 80 elle-même suspendue à un pylône (non illustré). Plus précisément, la manille 34 est disposée sur le câble conducteur 76 au lieu de fixation, puis le sommet 32 de l'étrier 26 est introduit dans la manille 34 avant de la refermer à l'aide de son axe boulonné 36 et de sécuriser cette fermeture à l'aide de la goupille 38. On obtient ainsi la disposition finale de la figure 9 selon laquelle le dispositif de lestage 10 est suspendu par l'extrémité supérieure 20 de son élément de fixation 18 au câble conducteur 76 et à l'aplomb de la chaîne d'isolateurs 80.

Il apparaît clairement qu'un dispositif de lestage tel que celui décrit précédemment permet une inspection visuelle simple et rapide de son état, ce qui permet d'anticiper une corrosion éventuelle des bras de l'étrier 26, voire même de la vis 46 de l'arbre de maintien 44, tout en présentant optionnellement des volumes libres 72 permettant de retarder cette corrosion en coopération avec les fentes radiales 12E, 14E et 16E.

On notera par ailleurs que l'invention n'est pas limitée au mode de réalisation décrit précédemment.

Tout d'abord, même si seul un étrier 26 à deux bras 28, 30 a été détaillé précédemment, l'élément de fixation 18 pourrait ne comporter qu'un seul bras d'insertion du ou des contrepoids, sous réserve de quelques adaptations à la portée de l'homme du métier. En effet, dans ce cas il conviendrait sans doute de prévoir que le bras d'insertion soit central pour une question d'équilibre, de sorte que l'arbre de maintien 44 devrait alors par exemple être remplacé par plusieurs éléments décentrés et symétriques de maintien, toujours pour une question d'équilibre.

En outre, le nombre de contrepoids de même que les différents poids possibles des contrepoids disponibles ou leurs formes sont autant de paramètres simples à considérer et faire varier en fonction du contexte et du lestage souhaités.

Le nombre de fente(s) radiale(s) et leur ouverture angulaire est également un paramètre à envisager dans la conception de chaque contrepoids, sous réserve de quelques adaptations à la portée de l'homme du métier. Ainsi le mode de réalisation précité pourrait être simplement adapté pour que chaque contrepoids présente deux fentes radiales opposées permettant l'accès visuel latéral aux deux bras 28 et 30 de l'étrier 46. Dans ce cas, les deux fentes radiales ne peuvent évidemment pas s'étendre jusqu'à l'arbre de maintien 44 pour le rendre visible latéralement.

Par ailleurs, dans le mode de réalisation décrit précédemment, trois contrepoids sont empilés tête-bêche deux à deux par rapport à l'emplacement de leur unique fente radiale. Mais dans d'autres modes de réalisation, un nombre quelconque de contrepoids pourrait être empilé, avec un décalage angulaire quelconque deux à deux par rapport à l'emplacement de leur unique fente angulaire (i.e. autour de l'axe D).

Il apparaîtra plus généralement à l'homme de l'art que diverses modifications peuvent être apportées au mode de réalisation décrit ci-dessus, à la lumière de l'enseignement qui vient de lui être divulgué. Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Dispositif (10) de lestage d'une ligne aérienne (78) de transport et/ou de distribution de courant électrique, comportant :
- au moins un contrepoids (12, 14, 16) à surface latérale ; et
- un élément (18) de fixation dudit au moins un contrepoids (12, 14, 16) à la ligne aérienne par suspension, comportant :
• une première extrémité (20), dite supérieure, de fixation à la ligne aérienne (78),
• au moins un bras (22) destiné à traverser ledit au moins un contrepoids (12, 14, 16), et
• une deuxième extrémité (24), dite inférieure, de solidarisation dudit au moins un contrepoids (12, 14, 16) audit au moins un bras (22) de l'élément de fixation (18) ;
**caractérisé en ce que** chaque contrepoids (12, 14, 16) comporte au moins une fente radiale (12E, 14E, 16E) s'étendant de sa surface latérale vers l'intérieur de manière à rendre latéralement visible au moins l'un dudit au moins un bras (22) de l'élément de fixation (18) lorsque ce dernier le traverse.

2. Dispositif de lestage (10) selon la revendication 1, dans lequel l'élément de fixation (18) comporte un étrier (26) à deux bras (28, 30).

3. Dispositif de lestage (10) selon la revendication 1 ou 2, comportant plusieurs contrepoids (12, 14, 16) et dans lequel chaque contrepoids comporte au moins un bossage (50), situé en face inférieure ou supérieure lorsqu'il est suspendu et traversé par ledit au moins un bras (22) de l'élément de fixation (18), de manière à maintenir un volume libre (72) entre les contrepoids deux à deux lorsqu'ils sont empilés dans ledit au moins un bras (22) de l'élément de fixation (18).

4. Dispositif de lestage (10) selon la revendication 3, dans lequel chaque contrepoids (12, 14, 16) comporte ledit au moins un bossage (50) en face supérieure et comporte en outre au moins une cavité correspondante (64) en face inférieure, ladite au moins une cavité (64) étant dimensionnée en profondeur (H) pour recevoir une partie seulement de l'épaisseur (H') dudit au moins un bossage (50) d'un autre contrepoids.

5. Dispositif de lestage (10) selon la revendication 3 ou 4, dans lequel chaque contrepoids (12, 14, 16) comporte quatre bossages (50) en face supérieure au voisinage des quatre coins d'un carré qu'il forme et quatre cavités correspondantes (64) en face inférieure pour recevoir une partie seulement de l'épaisseur (H') des quatre bossages (50) d'un autre contrepoids.

6. Dispositif de lestage (10) selon l'une quelconque des revendications 1 à 5, comportant plusieurs contrepoids (12, 14, 16) et au moins un arbre de maintien (44) traversant chaque contrepoids (12, 14, 16) pour un maintien des contrepoids (12, 14, 16) entre eux.

7. Dispositif de lestage (10) selon l'une quelconque des revendications 1 à 6, dans lequel chaque contrepoids (12, 14, 16) comporte une unique fente radiale (12E, 14E, 16E), s'étendant par exemple jusqu'à un axe central (D).

8. Dispositif de lestage (10) selon la revendication 7, comportant plusieurs contrepoids (12, 14, 16) empilés avec un décalage angulaire, notamment tête-bêche, deux à deux par rapport à l'emplacement de leur unique fente radiale (12E, 14E, 16E).

9. Dispositif de lestage (10) selon l'une quelconque des revendications 1 à 8, dans lequel chaque contrepoids (12, 14, 16) est de forme générale carrée aux angles arrondis.

10. Dispositif de lestage (10) selon l'une quelconque des revendications 1 à 9, dans lequel chaque contrepoids (12, 14, 16) pèse 40 kg +/- 10% ou 80 kg +/- 10% et présente une épaisseur (E1, E2) adaptée en fonction de ce poids.

11. Procédé de lestage d'une ligne aérienne (78) de transport et/ou de distribution de courant électrique, comportant les étapes suivantes :
- fourniture (100) d'au moins un contrepoids (12, 14, 16) à surface latérale ;
- fourniture (102) d'un élément (18) de fixation dudit au moins un contrepoids (12, 14, 16) à la ligne aérienne (78) par suspension, comportant :
• une première extrémité (20), dite supérieure, de fixation à la ligne aérienne (78),
• au moins un bras (22) destiné à traverser ledit au moins un contrepoids (12, 14, 16), et
• une deuxième extrémité (24) , dite inférieure, de solidarisation dudit au moins un contrepoids (12, 14, 16) audit au moins un bras (22) de l'élément de fixation (18) ;
- insertion (104) dudit au moins un contrepoids (12, 14, 16) autour dudit au moins un bras (22) de l'élément de fixation (18) ;
- solidarisation (106) dudit au moins un contrepoids (12, 14, 16) audit au moins un bras (22) de l'élément de fixation (18) par la deuxième extrémité inférieure (24) ; et
- fixation (110) de l'élément de fixation (18) à la ligne aérienne (78) par suspension à partir de sa première extrémité supérieure (20) ;
**caractérisé en ce que** chaque contrepoids (12, 14, 16) est fourni (100) avec au moins une fente radiale (12E, 14E, 16E) s'étendant de sa surface latérale vers l'intérieur, et **en ce que** chaque contrepoids (12, 14, 16) est inséré (104) autour dudit au moins un bras (22) de l'élément de fixation (18) de manière à rendre latéralement visible au moins l'un dudit au moins un bras (22) de l'élément de fixation (18) grâce à ladite au moins une fente radiale (12E, 14E, 16E).

12. Procédé de lestage selon la revendication 11, dans lequel l'élément de fixation (18) est fixé (110) sur la ligne aérienne (78) à l'aplomb d'une chaîne d'isolateurs (80) elle-même suspendue à un pylône.
